# EUROPEAN PATENT APPLICATION

(11) **EP 4 667 285 A1**
(43) Date of publication of application: **24.12.2025**
(21) Application number: 24756965.0
(22) Date of filing: 15.02.2024
(51) Int. Cl.: B60Q 1/14, B60Q 1/04, B60Q 1/10, B60Q 1/11, B60Q 1/076, F21V 7/00, F21V 14/04, F21W 102/155

(54) **VEHICLE LIGHTING SYSTEM, CONTROLLER FOR VARIABLE LIGHT DISTRIBUTION LAMP, CONTROL METHOD, AND PROGRAM**

(30) Priority: 17.02.2023 JP 2023023763; 17.02.2023 JP 2023023764
(71) Applicant: Koito Manufacturing Co., Ltd., Shinagawa-ku, Tokyo 141-0001 (JP)
(72) Inventor: KATAGIRI, Ryogo, Shizuoka-shi Shizuoka 424-8764 (JP)
(74) Representative: Algemeen Octrooi- en Merkenbureau B.V.
(86) International application number: PCT/JP2024/005312
(87) International publication number: WO 2024/172125

(57) **Abstract**

The variable light distribution lamp 110 is structured to generate a low beam light distribution in which a height of a cutoff line is controllable. A gaze tracking device 208 detects a driver's line of sight. A controller 130 changes a height of the cutoff line, by controlling the variable light distribution lamp 110, based on the driver's line of sight detected by the gaze tracking device 208.

## Description

### TECHNICAL FIELD

The present disclosure relates to a vehicle lamp apparatus.

### BACKGROUND ART

Many of vehicle lamp apparatuses are designed to be switchable between low beam illumination and high beam illumination. The low beam illumination aims to illuminate a nearby area of an own vehicle with a predetermined illuminance, whose light distribution is regulated by law so as not to cause glare to oncoming vehicle or preceding vehicle, and is mainly used during travel in an urban area. On the other hand, the high beam illumination aims to illuminate a wide and far front area with a relatively high illuminance, and is mainly used during high-speed travel on a road with less traffic of oncoming vehicle or preceding vehicle.

### RELATED-ART LITERATURE

### PATENT LITERATURE

Patent Literature 1: WO 2021-182151 A1
Patent Literature 2: WO 2021-200701 A1

### SUMMARY OF INVENTION

### TECHNICAL PROBLEM

### (Problem 1)

The present inventors examined the light distribution control of the low beam illumination, to find a problem below.

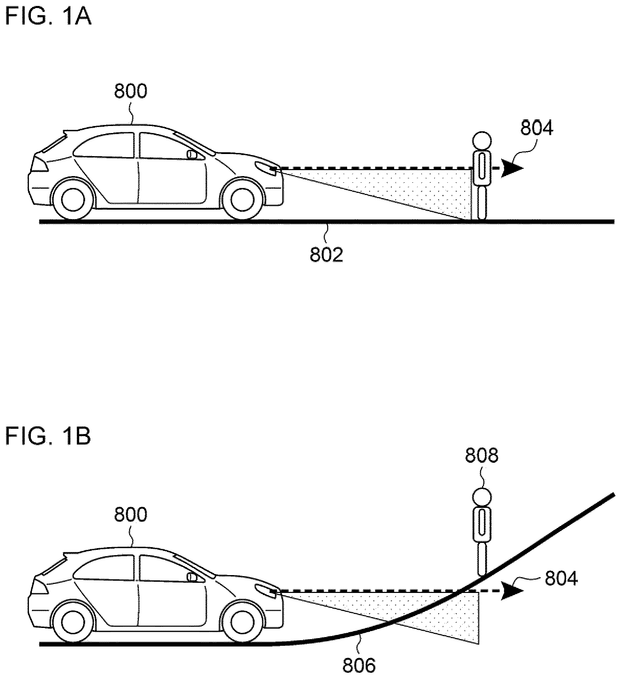

Figs. 1A and 1B are diagrams for explaining a low beam light distribution of a vehicle lamp apparatus. Fig. 1A illustrates a driving scene on a flat road. On a flat road 802, the low beam is illuminated over a range whose upper limit is defined by a horizontal direction 804 (strictly, 0.57° downward from the horizontal direction) based on a posture of a vehicle 800. This can ensure visibility ahead of the vehicle while suppressing glare to an oncoming vehicle.

Fig. 1B illustrates a driving scene on a hill road. The vehicle 800 travels at the start point of a hill road 806. The low beam is illuminated over a range whose upper limit is defined by the horizontal direction 804 based on a current posture of the vehicle 800. A sufficient level of field of view is not considered to be obtained, since the beam does not fall on a target 808 present on the hill road 806.

### (Problem 2)

The present inventors further examined the light distribution control of the low beam, to find a problem below.

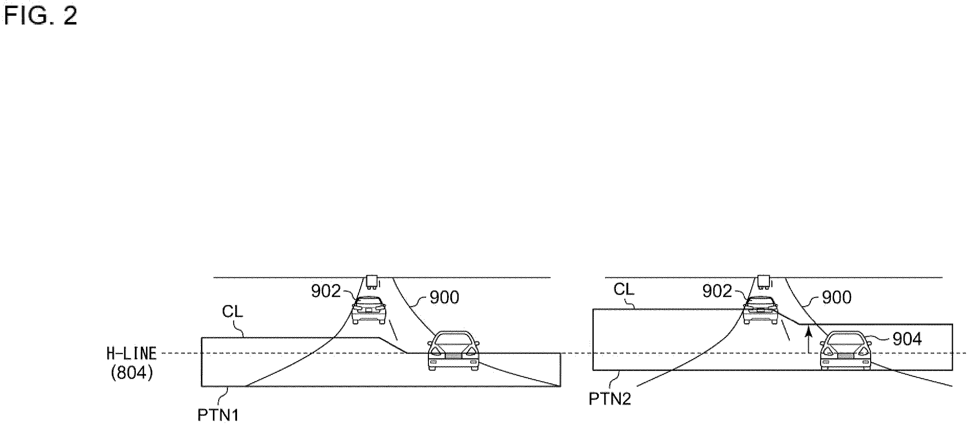

Fig. 2 is a diagram illustrating light distribution patterns of the low beam, at the start point of an uphill road 900. A light distribution pattern PTN1 on the left-hand side in Fig. 2 corresponds to Fig. 1B. An H-line corresponds to the horizontal direction 804 based on the posture of the vehicle 800 illustrated in Fig. 1, and the light distribution pattern PTN1 is formed based on the H-line. In the light distribution pattern PTN1, a preceding vehicle 902 is not illuminated with the low beam, thus failing in obtaining a sufficient field of view.

To address the problem, the present inventors have examined to shift, at the start point of the uphill road 900, the height of a cutoff line CL of the low beam above the H-line, as in a light distribution pattern PTN2 illustrated on the right-hand side in Fig. 2. With such light distribution pattern PTN2, the preceding vehicle 902 is illuminated with the low beam, thus succeeding in obtaining a wide field of view. The light distribution pattern PTN2 has, however, a problem of causing glare on an oncoming vehicle 904 if present near a host vehicle.

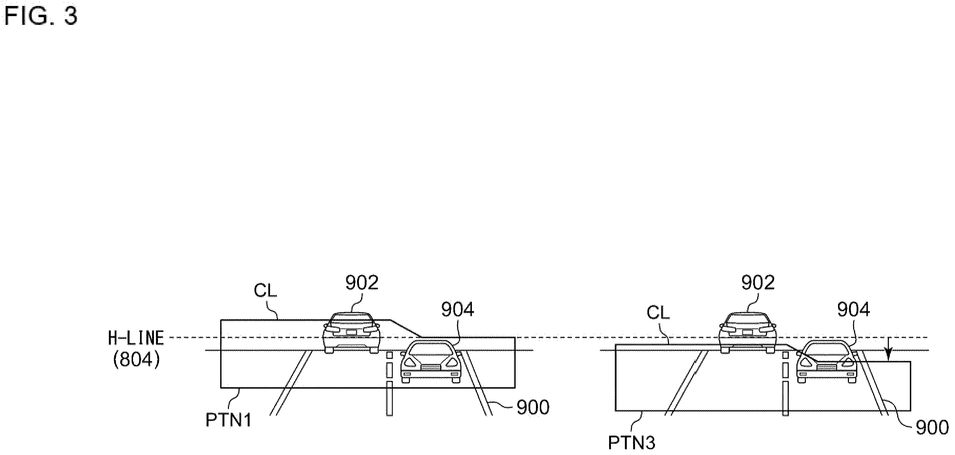

Fig. 3 is a diagram explaining light distribution patterns of the low beam, at the end point of the uphill road 900. Fig. 3 illustrates a light distribution pattern PTN1 of the low beam based on the H-line, causing glare on the oncoming vehicle 904.

In a light distribution pattern PTN3 on the right-hand side in Fig. 3, aimed at suppressing the glare on the oncoming vehicle 904, the height of the cutoff line CL of the low beam is shifted below the H-line, at the end point of the uphill road 900. Such light distribution pattern PTN3, although successfully suppresses the glare on the oncoming vehicle 904, will fail in illuminating the low beam on the preceding vehicle 902, thus degrading the visibility.

Note that this problem was uniquely recognized by the present inventors, and should not be regarded as a common recognition of those skilled in the art.

The present disclosure has been arrived at in consideration of such circumstances, and one exemplary embodiment thereof is to provide a vehicle lamp apparatus capable of reducing bother felt by human due to the ADB control. The present disclosure has been arrived at in such circumstances, wherein one of exemplary purposes thereof is to provide a light distribution suitable for travel on a hill road.

### SOLUTION TO PROBLEM

1. One aspect of the present disclosure relates to a vehicle lamp system. The vehicle lamp system includes: a variable light distribution lamp structured to generate a low beam light distribution in which a height of a cutoff line is controllable; a gaze tracking device structured to detect a driver's line of sight; and a controller structured to change the height of the cutoff line, by controlling the variable light distribution lamp based on the driver's line of sight detected by the gaze tracking device.
2. One aspect of the present disclosure relates to a vehicle lamp apparatus. The vehicle lamp apparatus includes a variable light distribution lamp that includes a patterning device having a plurality of pixels whose luminance is independently controllable according to an input image, and is structured to emit a low beam having a light distribution corresponding to the input image; and a controller structured to control light distribution of the low beam by generating the input image. The controller is structured independently control the height of the cutoff line on the left side and the height of the cutoff line on the side opposite to the vehicle lane side relative to an elbow point in accordance with a driving scene.

Note that also free combinations of these constituents, and also any of the constituents and expressions exchanged among the method, apparatus, and system, are valid as the aspects of the present disclosure. Also note that the description of this section (SOLUTION TO PROBLEM) does not describe all essential features of the invention, and thus also subcombinations of these features described may constitute the invention.

### ADVANTAGEOUS EFFECTS OF INVENTION

According to one aspect of the present disclosure, visibility on the hill road may be improved. According to one aspect of the present disclosure, also a light distribution suitable for travel on the hill road may be provided.

### BRIEF DESCRIPTION OF DRAWINGS

[Fig. 1] Figs. 1A and 1B are diagrams for explaining a low beam light distribution of a vehicle lamp apparatus.
[Fig. 2] Fig. 2 is a diagram for explaining light distribution patterns of the low beam at the start point of an uphill road.
[Fig. 3] Fig. 3 is a diagram explaining light distribution patterns of the low beam, at the end point of the uphill road.
[Fig. 4] Fig. 4 is a block diagram illustrating a lamp system according to Embodiment 1.
[Fig. 5] Fig. 5 is a diagram illustrating formation of a low beam light distribution by the lamp system illustrated in Fig. 4.
[Fig. 6] Fig. 6 is a diagram for explaining control of low beam light distribution, according to fluctuation of pitch angle θp.
[Fig. 7] Fig. 7 is a diagram for explaining control of the low beam light distribution, based on a line-of-sight direction φ.
[Fig. 8] Fig. 8 is a diagram for explaining line-of-sight control in accordance with a driving scene.
[Fig. 9] Fig. 9 is a diagram illustrating one example of slope detection based on image processing.
[Fig. 10] Fig. 10 is a diagram illustrating one example of slope detection based on image processing.
[Fig. 11] Fig. 11 is a block diagram illustrating a lamp system according to Embodiment 2.
[Fig. 12] Fig. 12 is a diagram for illustrating a light distribution pattern at the start point of the uphill road.
[Fig. 13] Fig. 13 is a diagram for illustrating a light distribution pattern at the end point of the uphill road.
[Fig. 14] Fig. 14 is a diagram for explaining light distribution control on the uphill road.
[Fig. 15] Fig. 15 is a diagram for explaining light distribution control on a downhill road.

### DESCRIPTION OF EMBODIMENTS

### (Outline of Embodiments)

Some exemplary embodiments of the present disclosure will be outlined. This outline is intended for briefing some concepts of one or more embodiments, for the purpose of basic understanding of the embodiments, as an introduction before detailed description that follows, without limiting the scope of the invention or disclosure. Also note this outline is not an extensive overview of all possible embodiments, and is therefore not intended to limit any constituent indispensable for the embodiments. For convenience, the wording "one embodiment" may be used to designate a single embodiment (Example or Modified Example), or a plurality of embodiments (Examples or Modified Examples) disclosed in the present specification.

A vehicle lamp system according to one embodiment includes: a variable light distribution lamp structured to generate a low beam light distribution in which a height of a cutoff line is controllable; a gaze tracking device structured to detect a driver's line of sight; and a controller structured to change the height of the cutoff line, by controlling the variable light distribution lamp based on the driver's line of sight detected by the gaze tracking device.

The line-of-sight of the driver, at or around the start point of a hill road, is directed to some other target present on the hill road, and is therefore directed slightly upward relative to a horizontal direction based on a vehicle body. With the driver's line of sight incorporated in the light distribution control, it now becomes possible to illuminate the some other target present on the hill road, thereby improving the visibility.

In one embodiment, the variable light distribution lamp may include a patterning device having a plurality of pixels whose luminance is independently controllable according to an input image, and may be structured to emit a beam having a light distribution corresponding to the input image. The controller may be structured to shift, in a vertical direction, a pattern rendered in the input image based on the driver's line of sight.

In one embodiment, the gaze tracking device may include: a camera structured to capture an image of the driver; and a processing unit structured to detect the driver's line of sight based on the image captured by the camera.

In one embodiment, the gaze tracking device may include: a wearable device attachable to the driver and comprising at least one sensor; and a processing unit structured to detect the driver's line of sight by processing an output of the at least one sensor.

In one embodiment, the controller may be structured to enable or disable control of the variable light distribution lamp based on the driver's line of sight in accordance with a driving scene.

In one embodiment, the controller may be structure to enable or disable the control of the variable light distribution lamp based on the driver's line of sight in accordance with the presence or absence of a change in road gradient. Combination of the change in road gradient with the driver's line of sight enables more accurate control.

In one embodiment, the vehicle lamp system may further include an inertial sensor configured to detect an angular velocity and an acceleration of a vehicle body on which the vehicle lamp system is mounted. The controller may be structured to determine the presence or absence of the change in road gradient in accordance with an output of the inertial sensor.

In one embodiment, the vehicle lamp system may further include a camera structured to capture an image of an area ahead of a vehicle body on which the vehicle lamp system is mounted. The controller may be structured to determine the presence or absence of the change in road gradient, based on the image captured by the camera.

In one embodiment, the controller may be structured to determine the presence or absence of the change in road gradient, based on a vertical position of a preceding vehicle appearing in the image captured by the camera.

In one embodiment, the controller may be structured to determine the presence or absence of the change in road gradient, based on a shape of lane marker (lane line) appearing in the image captured by the camera.

In one embodiment, the controller may be structured to determine the presence or absence of the change in road gradient, based on map information.

A vehicle lamp apparatus according to one embodiment includes a variable light distribution lamp that includes a patterning device having a plurality of pixels whose luminance is independently controllable according to an input image, and is structured to emit a low beam having a light distribution corresponding to the input image; and a controller structured to control a light distribution of the low beam by generating the input image. The controller is structured to independently control the height of the cutoff line on the left side relative to an elbow point in the light distribution of the low beam, and the height of the cutoff line on the side opposite to the vehicle lane side relative to the elbow point, in accordance with a driving scene.

With such structure, it now becomes possible to brighten a visual field ahead of the vehicle, while suppressing glare on the oncoming vehicle.

In one embodiment, the controller may be structured to increase, at the start point of the uphill road, the height of the cutoff line on the vehicle lane side relative to the elbow point, while maintaining the height of the cutoff line on the oncoming lane side relative to the elbow point.

In one embodiment, the controller may be structured to increase, at the end point of the downhill road, the height of the cutoff line on the vehicle lane side relative to the elbow point, while maintaining the height of the cutoff line on the oncoming lane side relative to the elbow point.

In one embodiment, the controller may be structured to increase, at the end point of the uphill road, the height of the cutoff line on the oncoming lane side relative to the elbow point, while maintaining the height of the cutoff line on the vehicle lane side relative to the elbow point.

In one embodiment, the controller may be structured to increase, at the start point of the downhill road, the height of the cutoff line on the oncoming lane side relative to the elbow point, while maintaining the height of the cutoff line on the vehicle lane side relative to the elbow point.

In one embodiment, the low beam light distribution may has Z-shaped pattern. The controller may be structured to independently control the height of a right horizontal cutoff line on the right side relative to the elbow point, and the height of a left horizontal cutoff line on the vehicle lane side relative to the elbow point.

In one embodiment, the controller may be structured to increase, at the start point of the uphill road, the height of the left horizontal cutoff line, while maintaining the height of the right horizontal cutoff line.

In one embodiment, the controller may be structured to increase, at the end point of the downhill road, the height of the left horizontal cutoff line, while maintaining the height of the right horizontal cutoff line.

In one embodiment, the controller may be structured to decrease, at the end point of the uphill road, the height of the right horizontal cutoff line, while maintaining the height of the left horizontal cutoff line.

In one embodiment, the controller may be structured to decrease, at the start point of the downhill road, the height of the right horizontal cutoff line, while maintaining the height of the left horizontal cutoff line.

### (Embodiments)

Preferred embodiments will be explained below, referring to the attached drawings. All similar or equivalent constituents, members and processes illustrated in the individual drawings will be given same reference signs, so as to properly avoid redundant explanations. The embodiments are merely illustrative, and are not restrictive about the disclosure. All features and combinations thereof described in the embodiments are not always essential to the disclosure.

### (Embodiment 1)

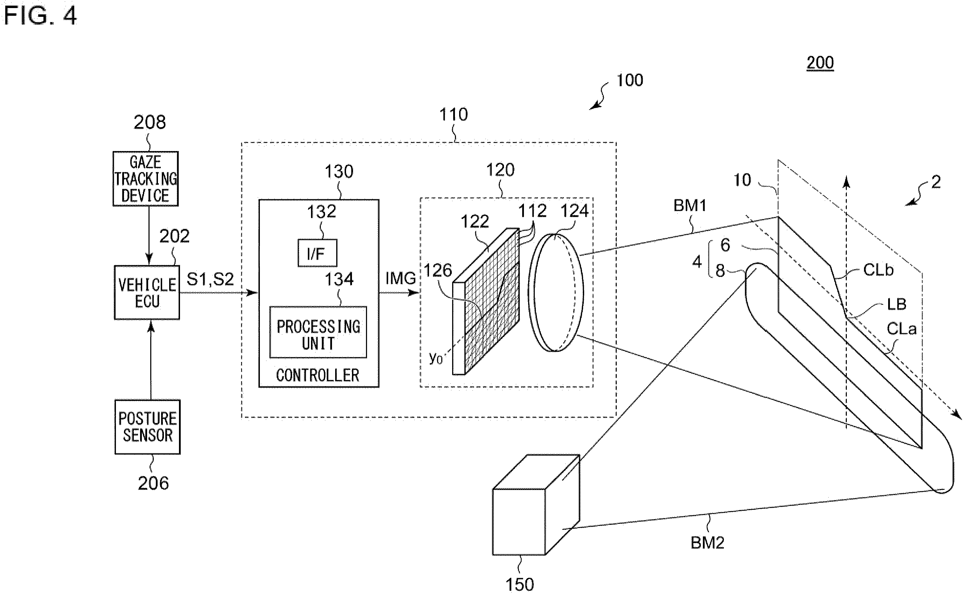

Fig. 4 is a block diagram illustrating a lamp system 200 according to Embodiment 1. The lamp system 200 is a headlight mounted on a car, structured to illuminate a field of view ahead of the vehicle, and to form at least a light distribution of the low beam.

The lamp system 200 has a vehicle lamp apparatus 100, a vehicle electronic control unit (ECU) 202, a posture sensor 206, and a gaze tracking device 208.

The posture sensor 206 is structured to enable detection of inclination (pitch angle θp) in a pitching direction of the vehicle body. The posture sensor 206 is typically a gyro sensor.

A gaze tracking device 208 is structured to enable detection of a driver's line of sight. For example, the gaze tracking device 208 may have a camera provided in a cabin, and a processing unit structured to process an image captured by the camera. By monitoring the head of the driver with the camera, and with the aid of image processing, it now becomes possible to estimate the driver's line of sight.

In some cases, a driver monitoring system may be provided inside the cabin, so as to monitor sleep, fatigue or illness of the driver. In other cases, a drive recorder may have a camera for capturing image inside the cabin. In these cases, the driver's line of sight may be detected with use of these cameras.

Alternatively, the gaze tracking device 208 may include: a wearable device attachable to the driver and comprising at least one sensor; and a processing unit structured to detect the driver's line of sight, by processing an output of the at least one sensor. Examples of the wearable device include augmented reality (AR) glasses.

The posture sensor 206 and the gaze tracking device 208 are connected to the vehicle ECU 202. The vehicle ECU 202 and the vehicle lamp apparatus 100 are connected through a vehicle bus such as controller area network (CAN) or local interconnect network (LIN). The vehicle ECU 202 transmits information (posture information) S1 that represents the pitch angle θp detected by the posture sensor 206, and information (line-of-sight information) S2 that represents the line-of-sight direction φ detected by the gaze tracking device 208, to the vehicle lamp apparatus 100.

The vehicle lamp apparatus 100 has a variable light distribution lamp 110 and a fixed light distribution lamp 150, and is structured to form a light distribution of the low beam by combining the two lamps. Note that the fixed light distribution lamp 150 is optional. The light distribution of the low beam may be formed only with the variable light distribution lamp 110.

The variable light distribution lamp 110 and the fixed light distribution lamp 150 illuminate different areas. Fig. 4 illustrates a virtual perpendicular screen 2, on which a low beam light distribution 4 is schematically illustrated. More specifically, the variable light distribution lamp 110 covers a rectangular area 10 indicated by an alternate long and short dash line. The rectangular area 10 is a planned area for forming the high beam light distribution. A first area 6, which occupies an upper part of the low beam light distribution containing the cutoff line CL, is contained in the rectangular area 10. The cutoff line CL contains a horizontal cutoff line CLa and an oblique cutoff line CLb, which intersect at an elbow point LB.

On the other hand, the fixed light distribution lamp 150 illuminates a second area 8, which occupies a lower part of the low beam light distribution 4, with a second bam BM2. The second area 8 is referred to as a diffused low beam light distribution. The first are 6 and the second area 8 are overlapped.

The variable light distribution lamp 110 is structured to generate a low beam light distribution in which a height of a cutoff line is controllable. The height of the cutoff line in the low beam light distribution may be understood as the emission direction of the low beam in the vertical direction V.

The variable light distribution lamp 110 has a high-definition lamp unit 120 and a controller 130. The high-definition lamp unit 120 contains a light-emitting element array 122, and an illumination optical system 124. The light-emitting element array 122 contains a plurality of pixels PIX arranged in a matrix. Luminance of the individual pixels PIX is independently controllable at multiple gradation levels according to an input image IMG. The light-emitting element array 122 usable herein may be an LED array.

The controller 130 generates an input image IMG that defines the luminance of the plurality of pixels PIX in the light-emitting element array 122, and supplies the input image IMG to the high-definition lamp unit 120.

The illumination optical system 124 projects an output light from the light-emitting element array 122, ahead of the vehicle. The illumination optical system 124 may be a lens optical system, a reflective optical system, or a combination of these systems.

Note that correspondence between a position of a certain pixel and an illumination area on the virtual perpendicular screen 2 ascribed to the pixel is determined by the illumination optical system 124, and may be occasionally given in a mirror image relation (left-right inversion), up-down inversion, or up-down and left-right inversion.

The controller 130 controls on/off of the plurality of pixels 112 in the light-emitting element array 122, so that the lower part of the first area 6 below the cutoff line CL on the virtual perpendicular screen 2 will be illuminated. More specifically, the controller 130 turns on the pixels below (or above) a line 126 that corresponds to the cutoff line, and turns off the pixels above (or below) the line.

The variable light distribution lamp 110 can vertically change the height of the cutoff line, by vertically shifting the boundary line 126 between an on-region and an off-region on the input image IMG.

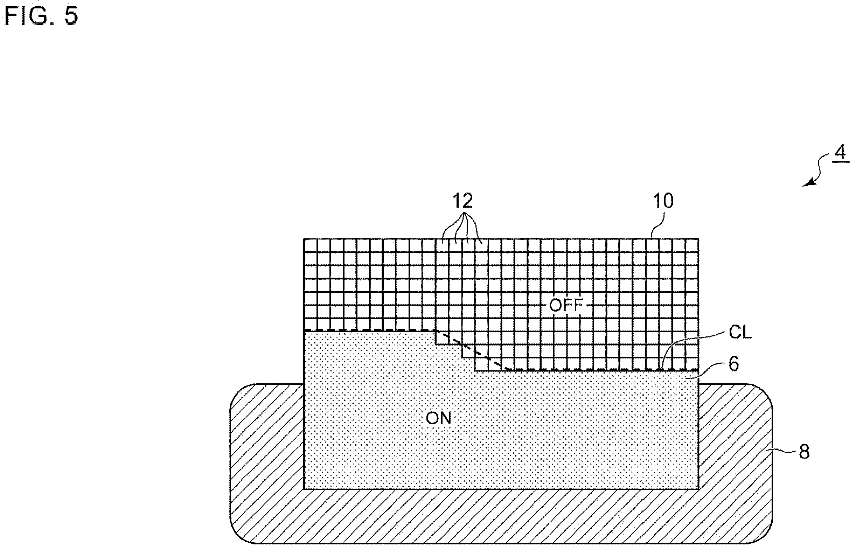

Fig. 5 is a diagram for explaining formation of the low beam light distribution 4 by the lamp system 200 illustrated in Fig. 4. A rectangle region 10 indicates an illumination range with use of the variable light distribution lamp 110, which is divided into a plurality of meshes (sub-regions) 12 that correspond to the plurality of pixels PIX. Illuminance of each mesh 12 is ascribed to the luminance of the corresponding pixel PIX.

With all the pixels in the light-emitting element array 122 turned on, all the meshes 12 in the rectangle region 10 are illuminated with a first beam BM1. With a part of the pixels PIX of the light-emitting element array 122 turned off, the illuminance of the mesh 12 that corresponds to such pixel will be substantially zero. Note that the pixel PIX being turned off is not limited to a case where the luminance is zero, that is, a case where the illuminance of the corresponding mesh 12 is zero, but may include a case where the luminance is very small, that is, a case where the illuminance of the corresponding mesh 12 is not zero but is very small.

The controller 130 generates the input image IMG, so that the pixels that correspond to the mesh 12 above the cutoff line CL will be turned off, and so that the pixels that correspond to the mesh 12 below the cutoff line CL will be turned on.

Referring now back to Fig. 4. The controller 130 includes an interface circuit 132 and a processing unit 134. The interface circuit 132 receives the posture information S1 and line-of-sight information S2 through the vehicle bus. The processing unit 134 of the controller 130 dynamically controls the direction of emission of the low beam, in other words, the height of the cutoff line CL, based on the posture information S1 and the line-of-sight information S2. The processing unit 134 may be implemented by combining hardware such as microcontroller or CPU, with a software program product.

More specifically, the controller 130 generates the input image IMG based on the posture information S1, that is, the pitch angle θp, so that the height of the cutoff line above the road face will be kept constant, irrespective of posture change of the vehicle body.

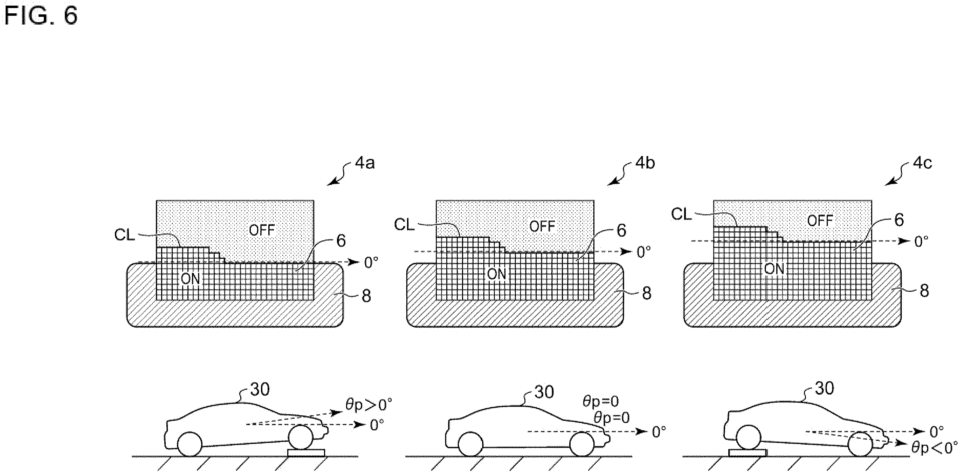

Fig. 6 is a diagram for explaining control of the low beam light distribution 4, according to fluctuation of the pitch angle θp. Fig. 6 illustrates, on the left thereof, a low beam light distribution 4a of the vehicle body 30 in a nose-up posture (θp > 0°). Fig. 6 illustrates, at the center thereof, a low beam light distribution 4b of the vehicle body 30 with no inclination (θp = 0°). Fig. 6 illustrates, on the right thereof, a low beam light distribution 4c of the vehicle body 30 in a nose-dive posture (θp < 0°). The numeral 0° indicates an angle horizontal to the road face. Shading in the diagram represents the illuminance of the individual meshes.

The second area 8 formed by the fixed light distribution lamp 150 shifts up and down as the pitch angle θp changes, relative to the horizontal level at 0°. Meanwhile, the first area 6 is formed by the variable light distribution lamp 110 so as to keep the height of the cutoff line CL close to the horizontal level at 0° (specifically, -0.57°) even if the pitch angle θp would change, for which the position of the boundary between the on-pixel region and the off-pixel region among the plurality of pixels PIX is controlled.

With this lamp system 200, the cutoff line CL is controlled so as to keep a substantially horizontal level, even if the vehicle body is in the nose-up or nose-dive posture. This successfully provides the driver with a good field of view.

The aforementioned control is effective mainly on a flat road.

Referring now back to Fig. 1. The controller 130 controls the height of the cutoff line of the low beam light distribution, based on the line-of-sight information S2, that is, the line-of-sight direction φ (referred to as line-of-sight control).

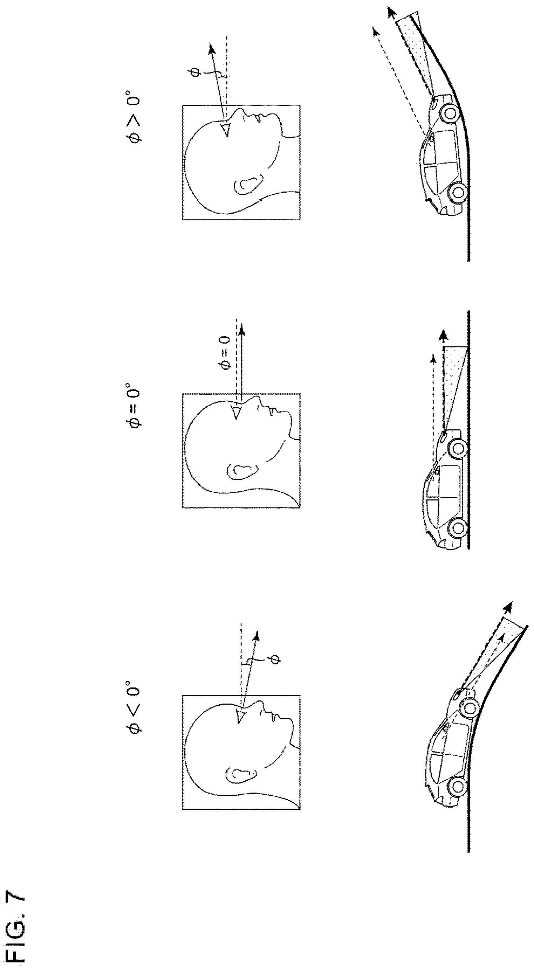

Fig. 7 is a diagram for explaining control of the low beam light distribution 4, based on the line-of-sight direction φ. The line-of-sight direction φ is defined while assuming the horizontal direction at 0, the upward direction is signed positively, and the downward direction is signed negatively.

As illustrated at the center of Fig. 7, the line-of-sight of the driver during travel on a normal flat road, is directed to a vanishing point, wherein the line of sight direction φ is substantially zero. At the start point of the uphill road, the line-of-sight of the driver is directed upward as illustrated on the right-hand side of Fig. 7, with the line-of-sight direction φ positively signed. Conversely, at the start point of the downhill road, the line-of-sight of the driver is directed downward as illustrated on the left-hand side of Fig. 7, with the line-of-sight direction φ negatively signed.

Any target present on the uphill road may therefore be illuminated with the low beam, by changing the direction of emission of the low beam on the uphill road depending on the line-of-sight direction φ, whereby the visibility may be improved.

Meanwhile on the downhill road, glare which would be applied to the preceding vehicle may be suppressed.

Note that the line-of-sight of the driver during driving ceaselessly moves in the vertical and lateral directions, so that it is not desirable to make the height of the cutoff line follow such instantaneous line-of-sight movement. The height of the cutoff line may therefore be controlled, typically in response to a signal after allowed to pass through a moving averaging filter or a low-pass filter in the line-of-sight direction φ.

Although the line-of-sight control is particularly effective in the vicinity of the start point and/or the end point of the hill road, the control would adversely affect the light distribution control in other locations. It is, therefore, preferred for the controller 130 to enable or disable the line-of-sight control, in accordance with a driving scene. More specifically, the controller 130 may determine whether or not the location is near the start point and/or the end point of the hill road, and may enable the line-of-sight control only when the location is determined to be near the start point and/or the end point of the hill road.

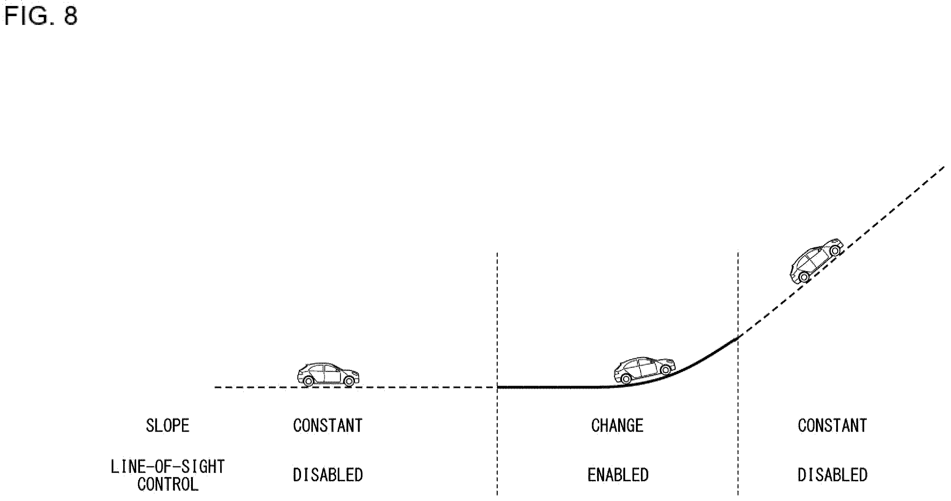

Fig. 8 is a diagram for explaining the line-of-sight control in accordance with a driving scene. The line-of-sight control is disabled at locations where the road gradient is constant, such as on a road face 900 and a road face 904, whereas enabled on a road face 902 where the road gradient changes.

Although method for detecting the change in road gradient is not particularly limited, several examples thereof will be described.

For example, the presence or absence of the change in road gradient may be determined, based on output of an inertial sensor configured to detect an angular velocity and an acceleration of the vehicle body on which the vehicle lamp apparatus 100 is mounted. More specifically, the absence of the change in road gradient change may be determined if the angular velocity ω is smaller than a predetermined threshold, whereby the line-of-sight control may be disabled. Conversely, presence of the change in road gradient may be determined if the angular velocity ω is larger than the threshold, whereby the line-of-sight control may be enabled. The posture sensor 206 in Fig. 4 may be used as the inertial sensor.

If the direction of motion vector of the vehicle body calculated from the acceleration were constant, it may be determined that there is no change in road gradient, and the line-of-sight control may be disabled. Conversely, the line-of-sight control may be enabled, upon detection of any change in the direction of motion vector.

Alternatively, the presence or absence of the change in road gradient may be detected by image processing.

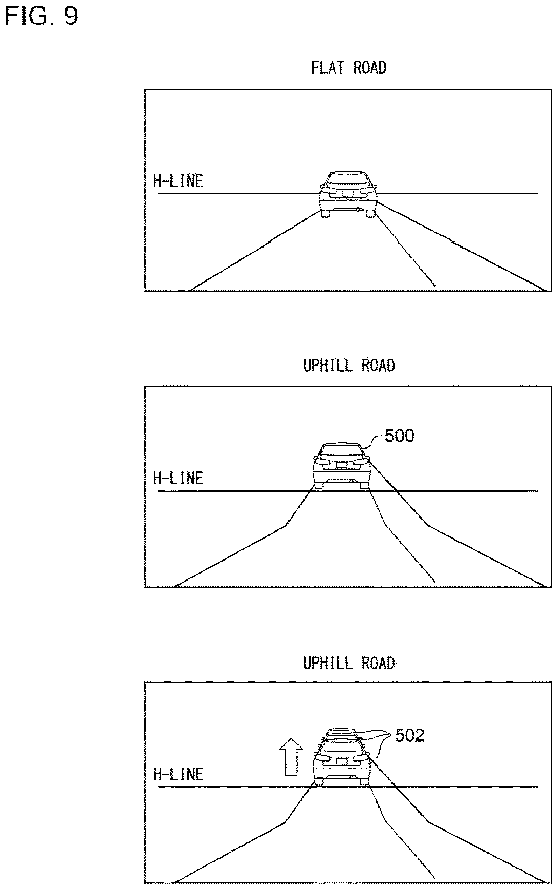

Fig. 9 is a diagram illustrating one embodiment of the slope detection based on image processing. Fig. 9 illustrates an image captured on a flat road, and images captured before the uphill road. During travel on the flat road, a front vehicle 500, that is, a preceding vehicle or an oncoming vehicle is located below the H-line. On the other hand, when an uphill road appears ahead, the relative positional relationship between the H-line and the front vehicle 500 in the vertical direction will change. The change in road gradient is detectable with use of this property. More specifically, the change in road gradient is detectable with use of a camera, and a processing unit structured to process an image captured by the camera. The camera captures an image of an area ahead of the vehicle. The processing unit may be the processing unit 134 of the controller 130 illustrated in Fig. 1, or may be a hardware installed on the vehicle.

The processing unit may analyze a camera image, may determine that there is a change in road gradient if the front vehicle 500 is present above the H-line (0° in the vertical direction), and may enable the line-of-sight control.

Alternatively, the processing unit may determine that there is a change in road gradient, if the front vehicle 502 continuously moves in the vertical direction over a certain period, and may enable the line-of-sight control.

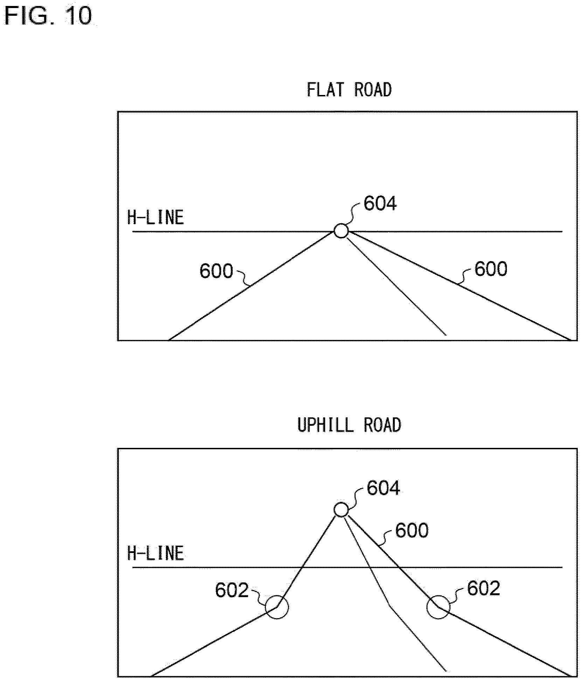

Fig. 10 is a diagram illustrating one embodiment of slope detection based on image processing. Fig. 10 illustrates an image captured on a flat road, and an image captured before an uphill road. The presence or absence of the change in road gradient is detectable based on a shape of a lane marker (lane line) 600. That is, the lane marker 600 on the flat road may be regarded to be substantially straight. On the other hand, during travel before the uphill road, there appear kinks 602 on the lane marker 600, near the start point of the uphill road. Presence of the change in road gradient may therefore be determined, if the image analysis was conducted to find presence or absence of the kinks 602, and the kinks 602 were thus detected.

Alternatively, the position of the lane marker 600 on the flat road is kept almost constant in the image. On the other hand, at the start point of the uphill road, the position of the lane marker 600 will shift from the position on the flat road. Presence or absence of the change in road gradient may therefore be determined by image processing, based on the position of the lane marker 600.

Alternatively, on the flat road, a vanishing point 604 resides near the H-line. On the other hand, before the uphill road, the vanishing point 604 exists at a position vertically away from the H-line. The vanishing point 604 may therefore be detected by image processing, to determine whether or not the position of the vanishing point 604 has been shifted from the position of the vanishing point seen on the flat road, and may determine there is the change in road gradient if the position has been shifted. The vanishing point may alternatively be detected, by extending the lane marker 600.

Note in the slope detection with use of the vanishing point 604, the position of the vanishing point may alternatively be detected with use of a technique such as optical flow, in place of using the lane marker.

Alternatively, the presence or absence of the change in road gradient may be detected, based on map information owned by a car navigation system of the vehicle, or map information accumulated in an external server.

### (Embodiment 2)

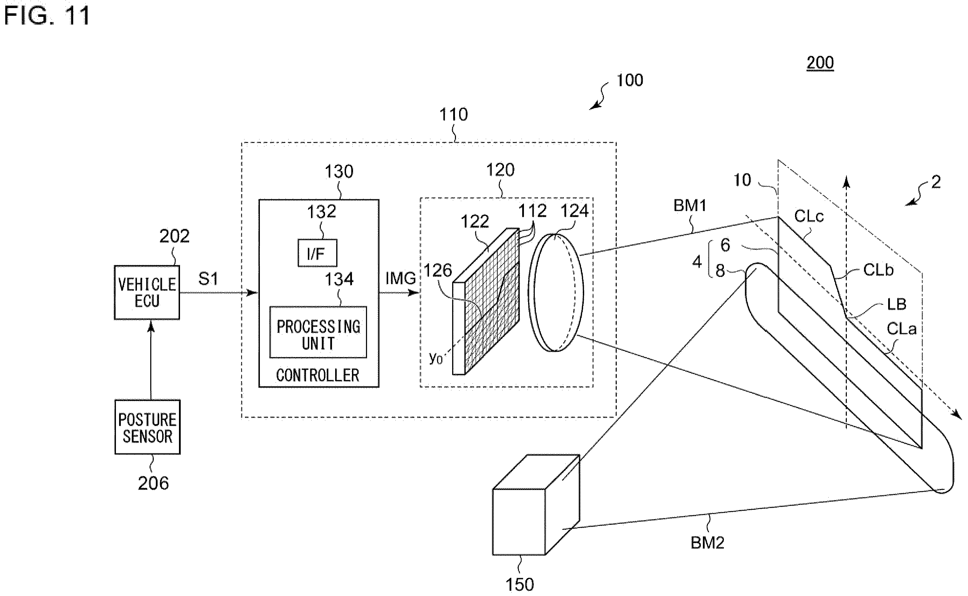

Fig. 11 is a block diagram illustrating the lamp system 200 according to Embodiment 2. The lamp system 200 is a headlight mounted on a car, structured to illuminate a field of view ahead of the vehicle, and to form at least a low beam light distribution.

The lamp system 200 has the vehicle lamp apparatus 100, the vehicle electronic control unit (ECU) 202, and a posture sensor 206.

The posture sensor 206 is structured to enable detection of inclination (pitch angle θp) in a pitching direction of the vehicle body. The posture sensor 206 is typically a gyro sensor.

The posture sensor 206 is connected to the vehicle ECU 202. The vehicle ECU 202 and the vehicle lamp apparatus 100 are connected through a vehicle bus such as controller area network (CAN) or local interconnect network (LIN). The vehicle ECU 202 transmits information (posture information) S1 that represents the pitch angle θp detected by the posture sensor 206, to the vehicle lamp apparatus 100.

The vehicle lamp apparatus 100 has a variable light distribution lamp 110 and the fixed light distribution lamp 150, and is structured to form a low beam light distribution by combining the two lamps. Note that the fixed light distribution lamp 150 is optional. The low beam light distribution may be formed only with the variable light distribution lamp 110.

The variable light distribution lamp 110 and the fixed light distribution lamp 150 illuminate different areas. Fig. 11 illustrates the virtual perpendicular screen 2, on which the low beam light distribution 4 is schematically illustrated. More specifically, the variable light distribution lamp 110 covers a rectangular area 10 indicated by an alternate long and short dash line. The rectangular area 10 is a planned area for forming the high beam light distribution. A first area 6, which occupies an upper part of the low beam light distribution containing the cutoff line CL, is contained in the rectangular area 10.

In this embodiment, the low beam light distribution 4 has Z-shaped pattern, wherein the cutoff line CL includes a right horizontal cutoff line CLa, an oblique cutoff line CLb, and a left horizontal cutoff line CLc.

On the other hand, the fixed light distribution lamp 150 illuminates a second area 8, which occupies a lower part of the low beam light distribution 4, with a second bam BM2. The second area 8 is referred to as a diffused low beam light distribution. The first are 6 and the second area 8 are overlapped.

The variable light distribution lamp 110 is structured to emit the low beam having a light distribution corresponding to the input image IMG. The variable light distribution lamp 110 has a high-definition lamp unit 120 and a controller 130. The high-definition lamp unit 120 contains a light-emitting element array 122, and an illumination optical system 124. The light-emitting element array 122 contains a plurality of pixels PIX arranged in a matrix. Luminance of the individual pixels PIX is independently controllable at multiple gradation levels according to an input image IMG. The light-emitting element array 122 usable herein may be an LED array.

The controller 130 generates an input image IMG that defines the luminance of the plurality of pixels PIX in the light-emitting element array 122, and supplies the input image IMG to the high-definition lamp unit 120.

The illumination optical system 124 projects an output light from the light-emitting element array 122, ahead of the vehicle. The illumination optical system 124 may be a lens optical system, a reflective optical system, or a combination of these systems.

Note that correspondence between a position of a certain pixel and an illumination area on the virtual perpendicular screen 2 ascribed to the pixel is determined by the illumination optical system 124, and may be occasionally given in a mirror image relation (left-right inversion), up-down inversion, or up-down and left-right inversion.

The controller 130 controls on/off of the plurality of pixels 112 in the light-emitting element array 122, so that the lower part of the first area 6 below the cutoff line CL on the virtual perpendicular screen 2 will be illuminated. More specifically, the controller 130 turns on the pixels below (or above) a line 126 that corresponds to the cutoff line, and turns off the pixels above (or below) the line.

The variable light distribution lamp 110 can vertically change the height of the cutoff line, by vertically shifting the boundary line 126 between an on-region and an off-region on the input image IMG.

Formation of the low beam light distribution 4 by the lamp system 200 illustrated in Fig. 11 is similar to that in Embodiment 1 having been described while referring to Fig. 5, and will not therefore be described again.

The controller 130 includes an interface circuit 132 and a processing unit 134. The interface circuit 132 receives the posture information S1 through the vehicle bus. The processing unit 134 of the controller 130 dynamically controls the direction of emission of the low beam, in other words, the height of the cutoff line CL, based on the posture information S1. The processing unit 134 may be implemented by combining hardware such as microcontroller or CPU, with a software program product.

More specifically, the controller 130 generates the input image IMG based on the posture information S1, that is, the pitch angle θp, so that the height of the cutoff line above the road face will be kept constant, irrespective of posture change of the vehicle body.

Control of the low beam light distribution 4 based on the pitch angle θp is similar to that in Embodiment 1 having been described while referring to Fig. 6, and will not therefore be described again.

The aforementioned control is effective mainly on a flat road.

Next, controls effective on the uphill road and the downhill road will be described.

The controller 130 controls the height of the cutoff line in the low beam light distribution, in accordance with a driving scene. More specifically, the controller 130 independently controls the height of the cutoff line CLc on the left-hand side relative to the elbow point LB (left horizontal cutoff line) in the low beam light distribution, and the height of the cutoff line CLa on the side opposite to the vehicle lane side relative to the elbow point LB (right horizontal cutoff line), in accordance with a driving scene. Description herein will be made on the premise of left-hand traffic countries or areas, like Japan.

Hereinafter, control of the height of the cutoff line in some driving scenes will be described.

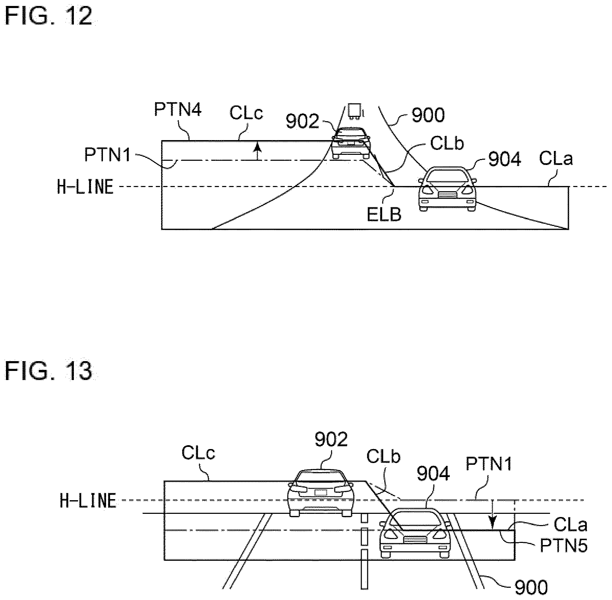

Fig. 12 is a diagram for illustrating a light distribution pattern PTN4 at the start point of the uphill road 900. Fig. 12 illustrates a normal light distribution pattern PTN1 for comparison. The controller 130 increases, at the start point of the uphill road 900, the height of the left horizontal cutoff line CLc on the vehicle lane side relative to the elbow point LB, relative to the normal light distribution pattern PTN1, while maintaining the height of the right horizontal cutoff line CLa on the oncoming lane side relative to the elbow point LB.

With this light distribution control, it now becomes possible to illuminate the beam on the preceding vehicle 902, while suppressing glare which would be applied to the oncoming vehicle 904.

Fig. 13 is a diagram for illustrating a light distribution pattern PTN5 at the end point of the uphill road. Fig. 13 illustrates the normal light distribution pattern PTN1 for comparison. When coming closer to the end point of the uphill road 900, the controller 130 lowers the height of the right horizontal cutoff line CLa, relative to the normal light distribution pattern PTN1, while maintaining the height of the left horizontal cutoff line CLc.

With this light distribution control, it now becomes possible to suppress glare which would be applied to the oncoming vehicle 904, while illuminating the beam on the preceding vehicle 902.

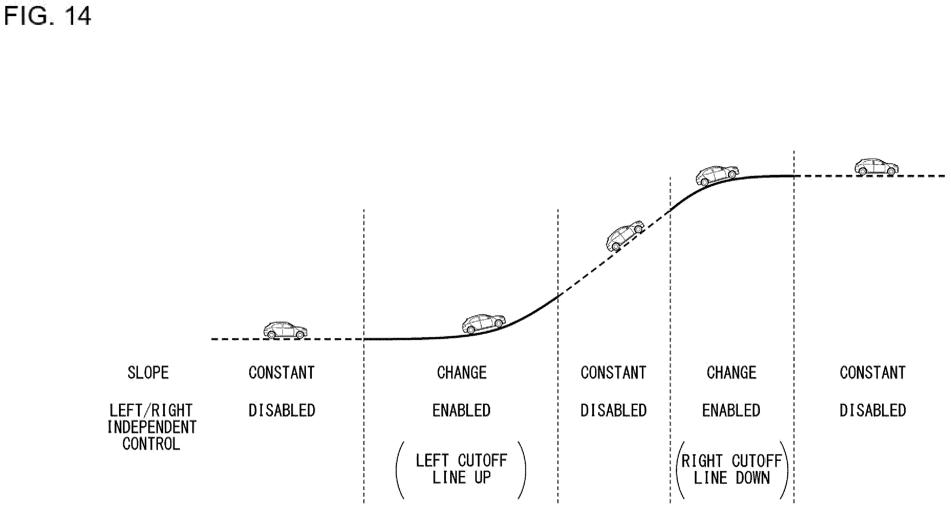

Fig. 14 is a diagram for explaining the light distribution control on the uphill road. The independent control for the left and right cutoff lines is enabled at the start point and the end point of the uphill road.

Note that the independent control for the left and for the right is also applicable similarly to the downhill road, in addition to, or in place of the uphill road.

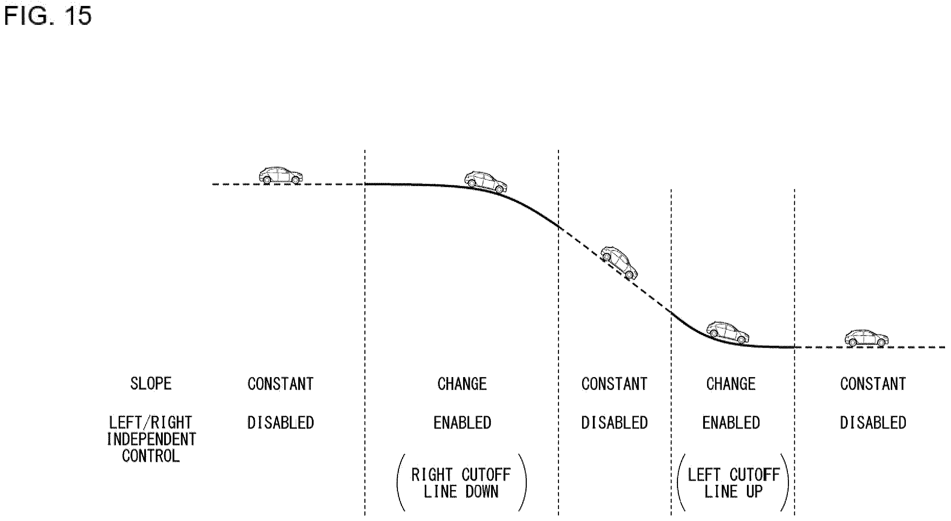

Fig. 15 is a diagram for explaining the light distribution control on the downhill road. The independent control for the left and right cutoff lines is enabled at the start point and the end point of the downhill road. More specifically, the controller 130 may lower, at the start point of the downhill road, the height of the right horizontal cutoff line CLa, while maintaining the height of the left horizontal cutoff line CLc. Alternatively, the controller 130 may increase, at the end point of the downhill road, the height of the left horizontal cutoff line CLc, while maintaining the height of the right horizontal cutoff line CLa.

With the height of the left and right cutoff lines thus independently controlled, the light distribution suitable for travel on a hill road may be provided.

Although having been described on the premise of the left-hand traffic countries or areas, the present disclosure is also applicable to the right-hand traffic countries or areas. In this case, the Z-shaped light distribution will have a laterally inverted shape, in which the right side relative to the elbow point LB corresponds to the vehicle lane side, and the left-hand side relative to the elbow point LB corresponds to the oncoming vehicle side.

Next, a description will be made on a driving scene which requires the light distribution control according to the Embodiment 2, more specifically, a method for detecting the start point or the end point of the uphill road or the downhill road. At the start point or the end point of the uphill road or the downhill road, the slope varies, rather than being kept constant. The controller 130 may therefore monitor the change in road gradient, to detect the start point or the end point of the uphill road or the downhill road.

A method for detecting the presence or absence of the change in road gradient applicable herein may be any one of the several methods described in Embodiment 1.

### (Modified Example)

Although the embodiments employed a gyro sensor as the posture sensor 206, the present disclosure is not limited thereto. The posture sensor 206 may alternatively be a pair of vehicle height sensors attached to the front and rear of the vehicle body.

The high-definition lamp unit 120 may be implemented by a combination of a light source, and a digital mirror device (DMD) structured to pattern the emitted light from the light source. Alternatively, the high-definition lamp unit 120 may be implemented by a combination of a light source, and a liquid crystal device structured to pattern the emitted light from the light source.

Although the Z-shaped low beam light distribution has been described in the embodiments, the present disclosure is not limited thereto, and is applicable to the low beam light distribution formed of the right horizontal cutoff line and an oblique cutoff line.

Having described the present disclosure with use of specific terms referring to the embodiments, the embodiments merely illustrate the principle and applications of the present disclosure, allowing a variety of modifications and layout change without departing from the spirit of the present disclosure specified by the claims.

### INDUSTRIAL APPLICABILITY

The present disclosure relates to a vehicle lamp apparatus.

### REFERENCE SIGNS LIST

200 lamp system, 202 vehicle ECU, 206 posture sensor, 208 gaze tracking device, 100 vehicle lamp apparatus, 110 variable light distribution lamp, 120 high-definition lamp unit, 122 light emitting element array, 124 illumination optical system, 130 controller, 132 interface circuit, 134 processing unit, 150 fixed light distribution lamp, BM1 first beam, BM2 second beam, 6 first area, 8 second area, 2 virtual perpendicular screen, S1 posture information, S2 line-of-sight information

## Claims

1. A vehicle lamp system comprising:
a variable light distribution lamp structured to generate a low beam light distribution in which a height of a cutoff line is controllable;
a gaze tracking device structured to detect a driver's line of sight; and
a controller structured to change the height of the cutoff line, by controlling the variable light distribution lamp based on the driver's line of sight detected by the gaze tracking device.

2. The vehicle lamp system according to claim 1, wherein the variable light distribution lamp includes a patterning device comprising a plurality of pixels whose luminance is independently controllable according to an input image, and is structured to emit a beam having a light distribution corresponding to the input image, and
the controller is structured to shift, in a vertical direction, a pattern rendered in the input image based on the driver's line of sight.

3. The vehicle lamp system according to claim 1 or 2, wherein the gaze tracking device includes:
a camera structured to capture an image of the driver; and
a processing unit structured to detect the driver's line of sight based on the image captured by the camera.

4. The vehicle lamp system according to claim 1 or 2, wherein the gaze tracking device comprises:
a wearable device attachable to the driver and comprising at least one sensor; and
a processing unit structured to detect the driver's line of sight by processing an output of the at least one sensor.

5. The vehicle lamp system according to claim 1 or 2, wherein the controller is structured to enable or disable the control of the variable light distribution lamp based on the driver's line of sight, in accordance with the presence or absence of a change in road gradient.

6. The vehicle lamp system according to claim 5, further comprising an inertial sensor configured to detect an angular velocity and an acceleration of a vehicle body on which the vehicle lamp system is mounted, wherein
the controller is structured to determine the presence or absence of the change in road gradient in accordance with an output of the inertial sensor.

7. The vehicle lamp system according to claim 5, further comprising a camera structured to capture an image of an area ahead of a vehicle body on which the vehicle lamp system is mounted, wherein
the controller is structured to determine the presence or absence of the change in road gradient based on the image captured by the camera.

8. The vehicle lamp system according to claim 7, wherein the controller is structured to determine the presence or absence of the change in road gradient, based on a vertical position of a preceding vehicle appearing in the image captured by the camera.

9. The vehicle lamp system according to claim 7, wherein the controller is structured to determine the presence or absence of the change in road gradient, based on a shape of a lane marker appearing in the image captured by the camera.

10. A controller configured to control a variable light distribution lamp structured to generate a low beam light distribution in which a height of a cutoff line is controllable;
the controller being structured to change the height of the cutoff line, by controlling the variable light distribution lamp based on information regarding a driver's line of sight.

11. The controller according to claim 10, wherein the variable light distribution lamp includes a patterning device having a plurality of pixels whose luminance is independently controllable according to an input image, and is structured to emit a beam having a light distribution corresponding to states of the plurality of pixels, and
the controller is structured to shift, in a vertical direction, a pattern rendered in the input image based on the driver's line of sight.

12. The controller according to claim 10 or 11, structured to enable or disable control of the variable light distribution lamp based on the driver's line of sight, in accordance with the presence or absence of a change in road gradient.

13. A control program product for controlling a variable light distribution lamp structured to generate a low beam light distribution in which a height of a cutoff line is controllable,
the control program product comprising:
a step of causing a processor to acquire information regarding a driver's line of sight; and
a step of causing the processor to change the height of the cutoff line, by controlling the variable light distribution lamp based on the driver's line of sight.

14. The control program product according to claim 13, further comprising:
a step of causing the processor to acquire information regarding a change in road gradient; and
a step of causing the processor to enable or disable control of the variable light distribution lamp based on the driver's line of sight, in accordance with the presence or absence of a change in road gradient.

15. A vehicle lamp apparatus comprising:
a variable light distribution lamp including a patterning device having a plurality of pixels whose luminance is independently controllable according to an input image, and structured to emit a low beam having a light distribution corresponding to the input image; and
a controller structured to control light distribution of the low beam by generating the input image,
wherein the controller is configured to independently control a height of a cutoff line on a left-hand side and a height of a cutoff line on the side opposite to the vehicle lane side relative to an elbow point in the light distribution of the low beam, in accordance with a driving scene.

16. The vehicle lamp apparatus according to claim 15, wherein the controller is structured, at a start point of an uphill road, to increase the height of the cutoff line on the vehicle lane side relative to the elbow point, while maintaining the height of the cutoff line on the side opposite to the vehicle lane side relative to the elbow point.

17. The vehicle lamp apparatus according to claim 15, wherein the controller is structured, at an end point of a downhill road, to increase the height of the cutoff line on the vehicle lane side relative to the elbow point, while maintaining the height of the cutoff line on the side opposite to the vehicle lane side relative to the elbow point.

18. The vehicle lamp apparatus according to claim 15, wherein the controller is structured, at an end point of an uphill road, to increase the height of the cutoff line on the side opposite to the vehicle lane side relative to the elbow point, while maintaining the height of the cutoff line on the vehicle lane side relative to the elbow point.

19. The vehicle lamp apparatus according to claim 15, wherein the controller is structured, at a start point of a downhill road, to increase the height of the cutoff line on the side opposite to the vehicle lane side relative to the elbow point, while maintaining the height of the cutoff line on the vehicle lane side relative to the elbow point.

20. The vehicle lamp apparatus according to claim 15, wherein the light distribution of the low beam has Z-shaped pattern, and the controller is structured to independently control a height of a right horizontal cutoff line on the right side relative to the elbow point, and a height of a left horizontal cutoff line on the vehicle lane side relative to the elbow point.

21. The vehicle lamp apparatus according to claim 20, wherein the controller is structured, at a start point of an uphill road, to increase the height of the left horizontal cutoff line, while maintaining the height of the right horizontal cutoff line.

22. The vehicle lamp apparatus according to claim 20, wherein the controller is structured, at an end point of a downhill road, to increase the height of the left horizontal cutoff line, while maintaining the height of the right horizontal cutoff line.

23. The vehicle lamp apparatus according to claim 20, wherein the controller is structured, at an end point of an uphill road, to decrease the height of the right horizontal cutoff line, while maintaining the height of the left horizontal cutoff line.

24. The vehicle lamp apparatus according to claim 20, wherein the controller is structured, at a start point of a downhill road, to decrease the height of the right horizontal cutoff line, while maintaining the height of the left horizontal cutoff line.

25. A controller for controlling a variable light distribution lamp,
the variable light distribution lamp comprising a patterning device having a plurality of pixels whose luminance is independently controllable according to an input image, and being structured to emit a low beam having a light distribution corresponding to the input image; and
the controller being structured to independently control a height of a cutoff line on a vehicle lane side relative to an elbow point in the light distribution of the low beam, and a height of a cutoff line on the opposite side relative to the elbow point, in accordance with a driving scene.

26. A program product for a controller structured to control a variable light distribution lamp,
the variable light distribution lamp comprising a patterning device having a plurality of pixels whose luminance is independently controllable according to an input image, and being structured to emit a low beam having a light distribution corresponding to the input image; and
the program product being structured to cause a processor:
to determine a driving scene;
to independently determine a height of a cutoff line on a left-hand side relative to an elbow point in the light distribution of the low beam, and a height of a cutoff line on a right side relative to the elbow point, in accordance with the driving scene; and
to generate the input image that specifies the light distribution of the low beam.

27. A control method for a variable light distribution lamp,
the variable light distribution lamp comprising a patterning device having a plurality of pixels whose luminance is independently controllable according to an input image, and being structured to emit a low beam having a light distribution corresponding to the input image; and
the control method comprising:
determining a driving scene;
independently determining a height of a cutoff line on a left side relative to an elbow point in the light distribution of the low beam, and a height of a cutoff line on a right side relative to the elbow point, in accordance with the driving scene; and
generating the input image that specifies the light distribution of the low beam.
